# EUROPÄISCHE PATENTSCHRIFT

(11) **EP 1 204 848 B1**
(45) Veröffentlichungstag und Bekanntmachung des Hinweises auf die Patenterteilung: **07.07.2004**
(21) Anmeldenummer: 00909042.4
(22) Anmeldetag: 19.02.2000
(51) Int. Cl.: G01F 23/26

(54) **VERFAHREN ZUR FÜLLSTANDSMESSUNG UND FÜLLSTANDSSENSOR**
METHOD FOR MEASURING LEVEL AND LEVEL SENSOR
PROCEDE DE MESURE DU NIVEAU DE REMPLISSAGE ET DETECTEUR DU NIVEAU DE REMPLISSAGE

(30) Priorität: 15.04.1999 DE 19916979
(43) Veröffentlichungstag der Anmeldung: 15.05.2002
(73) Patentinhaber: sci-worx GmbH, 30419 Hannover (DE)
(72) Erfinder: KLEMP, Heinz, D-30916 Isernhagen (DE)
(74) Vertreter: Gerstein, Hans Joachim, Dipl.-Ing.
(86) Internationale Anmeldenummer: PCT/DE2000/000475
(87) Internationale Veröffentlichungsnummer: WO 2000/063657

(56) Entgegenhaltungen:
- WO-A-96/33393
- GB-A- 2 304 418
- US-A- 5 437 184

## Beschreibung

Die Erfindung betrifft ein Verfahren zur Füllstandsmessung sowie einen Füllstandssensor mit einer Vielzahl von nebeneinander entlang einer Füllstrecke angeordneten kapazitiven Sensoren, die aus Feldelektroden und diametral gegenüberliegenden Meßelektroden bestehen.

Füllstandssensoren werden insbesondere in Kraftstofftanks, z. B. bei Kraftfahrzeugen und Motorrädern verwendet. Aus Sicherheitsgründen haben Kraftstofftanks zumeist eine sehr irreguläre Form, wodurch herkömmliche Potentiometer-Sensoren nur beschränkt einsetzbar sind. Ihre Auflösung und Genauigkeit ist im Bereich der Restmenge oder bei vollem Tank eingeschränkt. Außerdem sind Potentiometer-Sensoren verschleißanfällig und können leicht durch mechanische Einflüsse ausfallen.

Alternativ zu Potentiometer-Sensoren sind kapazitive Sensoren bekannt. So sind z. B. in der DE-AS 22 21 741 und der DE-PS 25 15 065 Füllstandssensoren mit übereinander entlang einer Füllstrecke angeordneten Kondensatoren beschrieben, die mit Impulsen an den Feldelektroden der Kondensatoren beaufschlagt werden. Die Meßelektroden sind mit einem Differenzverstärker verbunden. Die Dielektrizitätkonstante des Mediums, in das der Füllstandssenor eingetaucht ist, beeinflußt die Kapazität der Kondensatoren. In der DE-AS 22 21 741 bilden zwei benachbarte Kondensatoren der gleichen Kapazität einen Differentialkondensator. Die Differentialkondensatoren werden der Reihe nach an ihren gemeinsamen Elektroden mit einem Impulssignal beaufschlagt, so daß das Ausgangssignal des Differenzverstärkers null ist, wenn sich beide zu einem Differentialkondensator gehörigen Kondensatoren im gleichen Medium befinden. Entsprechend ist das Differenzsignal ungleich null, wenn sich die beiden Kondensatoren in verschiedenen Medien befinden. Das Ausgangssignal des Differenzverstärkers ist mit einem Impulszähler verbunden und die Anzahl der sich von null unterscheidenden Impulse ist ein Maß für die Füllhöhe.

Diese Anordnung hat den Nachteil, daß die jeweils beiden Kondensatoren, die einen Differenzkondensator bilden, exakt die gleiche Kapazität aufweisen müssen.

In der DE-OS 49 37 927 ist eine Einrichtung zur Füllstandsmessung beschrieben, bei der Kondensatoren zu einer ersten und mindestens einer weiteren Gruppe zusammengefaßt sind. Jede Gruppe enthält zwei Untergruppen von parallel geschalteten Kondensatoren. Zwei in Füllstreckenrichtung aufeinanderfolgende Kondensatoren derselben Gruppe weisen bei gleichem Dielektrikum annähernd gleiche Kapazitäten auf. Die Untergruppen einer Gruppe sind jeweils an eine gemeinsame Vergleichseinheit angeschlossen, die in Abhängigkeit von der Differenz der resultierenden Kapazitäten der Untergruppen ein digitales Vergleichssignal bildet. Als Referenzwert für die resultierende Kapazität einer Untergruppe dient die resultierende Kapazität einer anderen Untergruppe. Damit werden gleichsinnige Alterungs- und Umwelteinflüssen kompensiert.

Die Einrichtung hat den Nachteil, daß die Kondensatoren exakt die gleiche Kapazität aufweisen müssen. Außerdem ergeben sich Probleme durch parasitäre Streukapazitäten, da pro Impuls eine Reihe Kondensatoren angesprochen werden, die sich wechselseitig beeinflussen.

In der DE-PS 31 14 678 ist ein Füllstandsanzeiger beschrieben, bei dem mehrere Meßelektroden abschnittsweise zusammengefaßt und eine Auswerteschaltung zugeführt sind. Die Sensorelemente haben eine einzige Gegenelektrode. Die unterhalb eines Flüssigkeitsspiegels liegenden Kondensatoren sind durch das Dielektrikum der Flüssigkeit parallel geschaltet, so daß die resultierende Kapazität das Maß für die Flüssigkeitsstand ist. Es ist daher ein Referenzwert zur Umsetzung der gemessenen Kapazität in einen proportionalen Flüssigkeitsstand erforderlich. Der Referenzwert ist abhängig von dem zu messenden Medium und muß bei jedem neuen Befüllen des Behälters neu kalibriert werden. Zudem treten Streukapazitäten zwischen der Gegenelektrode und den Meßelektroden sowie zwischen den Meßelektroden auf.

Die DE-OS 39 26 218 A1 zeigt eine Füllstandsmeßeinrichtung, mit der der Füllstand inhomogen verteilter Medien ohne Kalibrierung eines Referenzwertes bestimmbar ist. Hierzu werden die Meßelektroden als Einzelelektroden einer Auswerteeinheit zugeführt und zyklisch sequentiell ausgewertet. Dabei wird jeder Kapazitätswert in einem Komparator mit einem Referenzwert verglichen, der für gleich große Elektroden gleich ist. Es ist eine einzige Gegenelektrode vorhanden, die die Behälterwand sein kann.

In der DE-PS 196 44 777 C1 ist ein Füllstandssensor beschrieben, bei dem die Meßelektroden der kapazitiven Sensoren einzeln ansteuerbar mit einer Füllstandsauswerteschaltung verbunden sind. Pro Feld sind die Gegenelektroden der entsprechenden Gruppe kapazitiver Sensoren zu einer Feldelektrode zusammengeschaltet und die Feldelektroden der Felder sind einzeln ansteuerbar mit der Füllstandsauswerteschaltung verbunden. Durch die Aufteilung der üblichen einstückigen Gegenelektroden in eine Vielzahl von Feldelektroden werden die Streukapazitäten reduziert.

Die US-A-5 437 184 beschreibt ein Verfahren zur Füllstandsmessung mit einer Vielzahl nebeneinander entlang einer Füllstrecke angeordneter kapazitiver Sensoren, die aus Feldelektroden und gegenüberliegenden Meßelektroden bestehen, wobei jede Feldelektroden mit jeweils zwei benachbarten Meßelektroden überlappt, mit den Schritten: Beaufschlagen einer Feldelektrode mit einem oszillierenden Eingangssignal; Messen der an den beiden mit der Feldelektrode überlappenden Meßelektroden erzeugten Ausgangssignale; Bestimmen der Phasendifferenz zwischen den beiden Ausgangssignalen; und Ermitteln des Füllstands in Abhängigkeit von der Phasendifferenz, wobei die Feldelektroden entlang der Füllstrecke der Reihe nach kontinuierlich beaufschlagt und die daraus resultierenden Signale ausgewertet werden.

Die GB-A-2 304 418 offenbart ein Verfahren zur kapazitiven Füllstandsmessung mittels einer Vorrichtung, bei der jeweils zwei Feldelektroden mit einer Meßelektrode überlappen. Die beiden Feldelektroden werden gleichzeitig mit einem Eingangssignal beaufschlagt, wobei eines der beiden Signale um 180° gegenüber dem anderen Signal phasenverschoben ist. An der zugeordneten Meßelektrode wird das resultierende Signal gemessen, aus dessen Amplitude der Füllstand bestimmt wird.

Oftmals befinden sich am Boden eines Kraftstofftanks Wasseransammlungen. Zudem kann die Dielektrizitätskonstante des Mediums variieren. Hierdurch treten bei den vorgenannten Füllstandssensoren Meßfehler auf.

Aufgabe der Erfindung war es daher, ein verbessertes Verfahren zur Füllstandsmessung mit einer Vielzahl von nebeneinander entlang einer Füllstrecke angeordneten kapazitiven Sensoren sowie einen Füllstandssensor hierzu zu schaffen, durch den der Füllstand von Tanks einfach und zuverlässig bestimmbar ist, auch wenn der Tank mit unbekannten oder verschiedenen Medien gefüllt ist.

Die Erfindung wird durch das Verfahren mit den Schritten gelöst:
- gleichzeitiges Beaufschlagen einer Feldelektrode mit einem Meßsignal und einer benachbarten Feldelektrode mit einem phasenverschobenen Meßsignal,
- Messen eines resultierenden Signals an der bzw. den den beaufschlagten Feldelektroden entsprechenden Messelektrode(n),
- Bestimmen der Phasenverschiebung des resultierenden Signals in bezug auf ein Referenzsignal, und
- Ermitteln des Füllstands in Abhängigkeit von der Phasenverschiebung, wobei die Sensoren entlang der Füllstrecke der Reihe nach kontinuierlich beaufschlagt und ausgewertet werden.

Indem die Sensoren, z. B. kapazitive Sensoren, gleichzeitig mit zwei gegeneinander phasenverschobenen Meßsignalen beaufschlagt werden, heben sich diese Signale auf, wenn sich die beaufschlagten Sensoren im gleichen Medium befinden. Hierzu ist es vorteilhaft, wenn die Meßsignale gegenphasig, d. h. um 180° phasenverschoben sind. Zudem sollten jeweils zwei Sensoren mit einem Signal beaufschlagt werden. Solange die Sensoren in einem Medium mit einer Dielektrizitätskonstanten εᵣ < > 1 befindlich sind, kompensieren sich die Signale in der Phase, auch wenn die Medien unterschiedlich sind.

Befindet sich ein Sensor in Luft, mit einer Dielektrizitätskonstanten εᵣ = 1, dann tritt eine Phasenverschiebung bei dem Summensignal aus den beiden gegeneinander phasenverschobenen Meßsignalen auf, wodurch die Füllhöhe erkannt wird.

Zur Vermeidung von parasitären Streukapazitäten ist es vorteilhaft, wenn die nicht mit einem Meßsignal beaufschlagten Sensoren auf ein Massepotential gelegt sind. Hierzu können die Meßelektroden jeweils einen Umschalter haben, mit dem sie an das Meßsignal, an das phasenverschobene Meßsignal oder das Massepotential gelegt werden können. Die Schalter können z. B. mit einem Mikroprozessor gesteuert werden.

Die Sensoren werden vorteilhafterweise entlang der Füllstrecke der Reihe nach kontinuierlich beaufschlagt, so daß die Füllstrecke kontinuierlich durchgescannt wird.

Die an den Meßelektroden der Sensoren gemessenen resultierenden Signale werden vorteilhafterweise mit einem Summierverstärker verstärkt und einem Phasenvergleicher zur Bestimmung der Phasenverschiebung zugeführt.

Besonders vorteilhaft ist es, wenn zusätzlich die Amplitude des Summensignals bestimmt wird. Durch Vergleich mit einem Referenzsignal ist es hierdurch möglich, das Medium zu bestimmen, das die jeweilige Meßelektrode umgibt.

Zur Vermeidung parasitärer Streukapazitäten ist es weiterhin vorteilhaft, die Meßelektroden wahlweise mit dem Summierverstärker oder einem Massepotential schaltbar zu verbinden. Diese Schalter können wiederum durch einen Mikroprozessor gesteuert werden.

Es hat sich als besonders vorteilhaft herausgestellt, wenn eine Vielzahl von Feldelektroden entlang der Füllstrecke vorgesehen sind, die jeweils mit dem Meßsignal beaufschlagt werden können. Das resultierende Signal sollte an Meßelektroden gemessen werden, wobei für mehrere Feldelektroden jeweils eine Meßelektrode vorgesehen ist. Es ist besonders vorteilhaft, wenn jeweils vier Feldelektroden mit einer Meßelektrode zusammenwirken.

Die Erfindung wird nachfolgend anhand der beigefügten Zeichnungen näher erläutert. Es zeigen:
- Figur 1 -: Blockschaltbild des Füllstandssensors mit Phasen - und Amplituden-Vergleicher;
- Figur 2 -: Prinzipskizze des Füllstandssensors mit beaufschlagten Sensoren, die oberhalb des Mediums sind;
- Figur 3 -: Prinzipskizze des Füllstandssensors mit beaufschlagten Sensoren, die in das Medium eingetaucht sind.

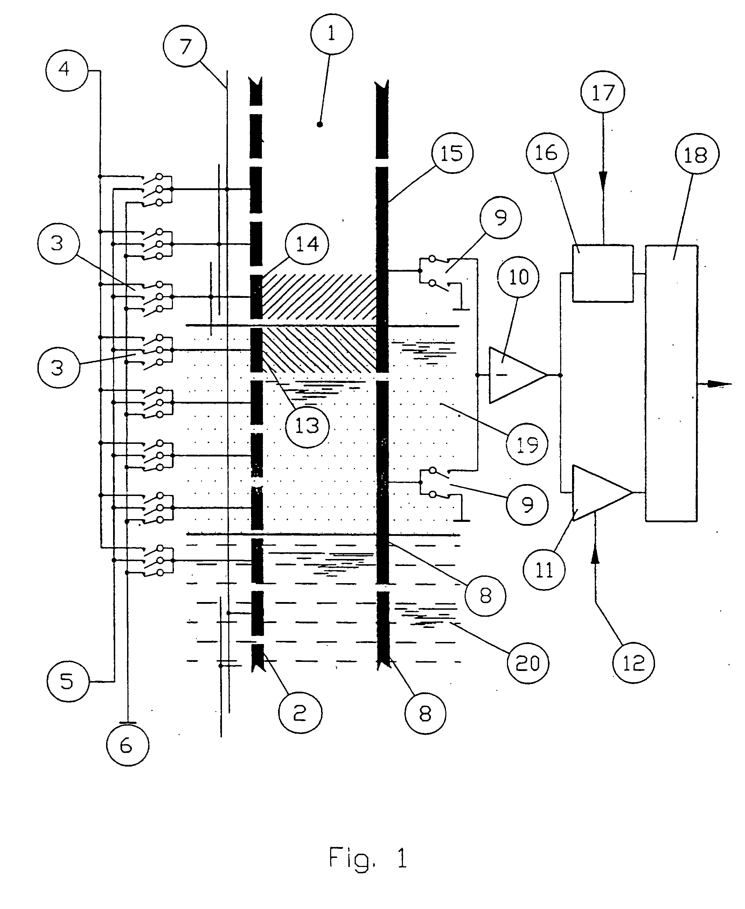

Die Figur 1 läßt ein Blockschaltbild des erfindungsgemäßen Füllstandssensors erkennen. Die kapazitiven Sensoren 1 sind im wesentlichen aus einer Vielzahl von Feldelektroden 2 gebildet, die nebeneinander entlang der Füllstrecke für ein Medium angeordnet sind. Pro Feldelektrode 2 ist jeweils ein Schalter 3 vorgesehen, mit dem die Feldelektrode 2 wahlweise mit einem Meßsignal 4, einem um 180° hierzu phasenverschobenen Meßsignal 5 oder einem Massepotential 6 verbunden werden kann. Alternativ zu der Verwendung jeweils eines Schalters 3 pro Feldelektrode 2 können auch entfernt voneinander liegende Feldelektroden 2 mit einer Busleitung 7 verbunden und gleichzeitig mit einem Meßsignal beaufschlagt werden. Dies hat den Vorteil, daß der Verdrahtungsaufwand und der Bedarf an Schaltern 3 verringert werden kann.

Diametral gegenüberliegend von den Feldelektroden 2 befinden sich Meßelektroden 8, die zusammen mit den Feldelektroden 2 als kapazitive Sensoren 1 arbeiten. Für eine Vielzahl von Feldelektroden 2 ist jeweils eine Meßelektrode 8 vorgesehen. Beispielhaft ist die Verwendung einer Meßelektrode 8 für vier Feldelektroden 2 skizziert. Die Meßelektroden 8 sind jeweils mit einem Schalter 9 wahlweise mit Massepotential oder einem Summierverstärker 10 verbindbar. Der Ausgang des Summierverstärkers 10 wird in einen Phasenvergleicher 11 geleitet, um das resultierende Meßsignal mit einem Referenzsignal 12 zu vergleichen.

Im skizzierten Beispiel befindet sich die untere Feldelektrode 13 der beaufschlagten Sensoren 1 in einem Medium und die obere Feldelektrode 14 in Luft. Aufgrund der unterschiedlichen Dielektrizitätskonstanten εᵣ von Luft und dem Medium tritt eine Phasenverschiebung des an der den beiden Feldelektroden 13 und 14 gegenüberliegenden Meßelektrode 15 anliegenden resultierenden Signals auf. Das resultierende Signal wird durch den Summierverstärker 10 verstärkt und die Phasenverschiebung als Maß für den Füllstand erkannt.

Zusätzlich ist der Summierverstärker 10 mit einem Amplitudenvergleicher 16 verbunden. Hierdurch ist es möglich die Amplitude des resultierenden Signals mit einer Referenzamplitude 17 zu vergleichen und das Medium zu bestimmen, in dem sich der beaufschlagte Sensor 1 befindet.

Die resultierenden Signale des Phasenvergleichers 11 und des Amplitudenvergleichers 16 können mit einem herkömmlichen Schnittstelleninterface 18 z. B. an einen Auswerte- und Steuerungsrechner übertragen werden.

Die Figur 1 läßt weiterhin die Problematik in herkömmlichen Tanks erkennen, daß bei der Messung der Füllhöhe nicht nur ein Übergang von Luft zu einem Medium, sondern auch ein Übergang zwischen verschiedenen Medien erkannt wird. Beispielsweise kann sich in dem Tank Treibstoff 19 und am Boden des Tanks Wasser 20 befinden. Beide Medien sind jedoch leitend, so daß sich die Phasen der Meßsignale gegeneinander aufheben. Lediglich die Amplitude des resultierenden Summensignals kann bei einem Übergang von zwei leitenden Medien variieren. Bei dem Übergang zwischen nicht leitender Luft und einem leitenden Medium tritt hingegen eine Phasenverschiebung des Signals in Bezug auf ein Referenzsignal 12 auf, so daß eine Füllhöhe detektiert wird.

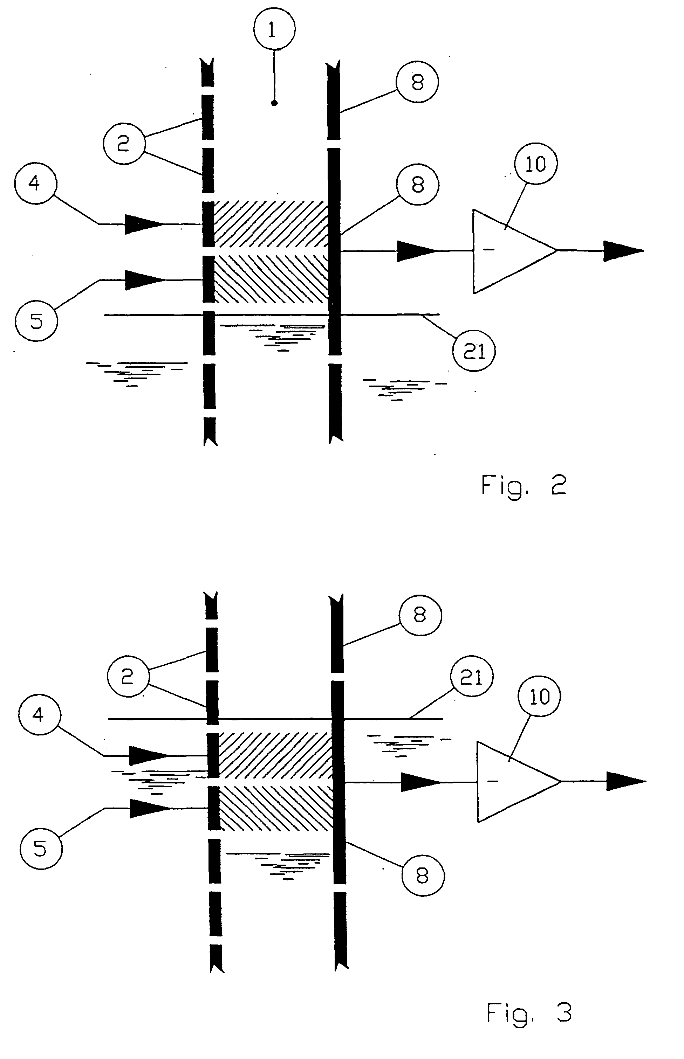

Die Figur 2 läßt eine Prinzipskizze des Füllstandssensors erkennen, bei dem die beaufschlagten Sensoren 1 in Luft oberhalb des Füllstandspegels 21 befindlich sind. Die zwei nebeneinanderliegenden Feldelektroden werden mit einem Meßsignal 4 und einem um 180° phasenverschobenen Meßsignal 5 beaufschlagt und das resultierende Signal an der gegenüberliegenden Meßelektrode 8 ausgewertet, nachdem es durch den Summierverstärker 10 verstärkt wurde. Wenn beide beaufschlagten Feldelektroden in Luft sind, beträgt die Dielektrizitätskonstante εᵣ = 1 und es findet keine Ladungsverschiebung an dem durch die Feldelektroden 2 und die Meßelektrode 8 gebildeten Kondensator statt. Das resultierende Signal ist somit null und nicht in Bezug auf ein Referenzsignal phasenverschoben. Dadurch wird erkannt, daß sich die beiden beaufschlagten Feldelektroden 2 im gleichen Medium befinden.

Die Figur 3 läßt eine Prinzipskizze des Füllstandssensors erkennen, bei dem die beaufschlagten Meßwertaufnehmer sich im gleichen Medium unterhalb des Füllstandspegels 21 befinden. Die beaufschlagten Feldelektroden 2 werden mit einem Meßsignal 4 und einem um 180° phasenverschobenen Meßsignal 5 beaufschlagt. Aufgrund der gleichen Dielektrizitätskonstanten heben sich die Signale gegenseitig auf und an der entsprechenden gegenüberliegenden Meßelektrode 8 wird ebenso wie dem Beispiel der Figur 2 festgestellt, daß keine Phasenverschiebung vorhanden ist.

Befindet sich jedoch eine Feldelektrode 2 oberhalb des Füllstandspegels 21 und die andere Feldelektrode 2 unterhalb des Füllstandspegels 21 im Medium, so tritt insbesondere dann eine Phasenverschiebung des resultierenden gemessenen Signals auf, wenn eine der beaufschlagten Feldelektroden 2 nur teilweise in das Medium eingetaucht ist. Die Phasenverschiebung wird gemessen und zeigt die Füllhöhe an.

Die Feldelektroden 2 werden kontinuierlich entlang der Füllstrecke z.B. mit einem Multiplexer der Reihe nach mit einem Meßsignal beaufschlagt. Wie aus den Figuren ersichtlich ist, ist die Fläche der Meßelektrode 8 größer als die der Feldelektrode 2, so daß die Signale mehrerer Feldelektroden 2 an einer einzigen Meßelektrode 8 bereits als Summensignal abgegriffen werden können.

## Patentansprüche

1. Verfahren zur Füllstandsmessung mit einer Vielzahl von nebeneinander entlang einer Füllstrecke angeordneten kapazitiven Sensoren (1), die aus Feldelektroden (2) und diametral gegenüberliegenden Messelektroden (8) bestehen, mit den Schritten:
- gleichzeitiges Beaufschlagen einer Feldelektrode (2) mit einem Meßsignal (4) und einer benachbarten Feldelektrode (2) mit einem phasenverschobenen Meßsignal (5),
- Messen eines resultierenden Signals an der bzw. den den beaufschlagten Feldelektroden entsprechenden Messelektrode(n) (8),
- Bestimmen der Phasenverschiebung des resultierenden Signals in bezug auf ein Referenzsignal (12), und
- Ermitteln des Füllstands in Abhängigkeit von der Phasenverschiebung, wobei die Sensoren (1) entlang der Füllstrecke der Reihe nach kontinuierlich beaufschlagt und ausgewertet werden.

2. Verfahren nach Anspruch 1, **dadurch gekennzeichnet, daß** die Phasenverschiebung zwischen dem Meßsignal (4) und dem phasenverschobenen Meßsignal (5) 180° beträgt.

3. Verfahren nach Anspruch 1 oder 2, **dadurch gekennzeichnet, daß** die nicht mit einem Meßsignal beaufschlagten Sensoren-(1) auf ein Massepotential (6) gelegt sind.

4. Verfahren nach einem der vorhergehenden Ansprüche, **gekennzei chnet durch** Erkennen eines Medium, das die beaufschlagten Sensoren (1) umgibt, durch Summieren der resultierenden Signale und Vergleichen der Amplitude des summierten Signals mit einer Referenzamplitude (17).

5. Füllstandssensor mit einer Vielzahl von nebeneinander entlang einer Füllstrecke angeordneten kapazitiven Sensoren (1), die aus Feldelektroden (2) und diametral gegenüberliegenden Meßelektroden (8) bestehen, wobei die Sensoren (1) entlang der Füllstrecke der Reihe nach kontinuierlich beaufschlagbar und auswertbar sind, **dadurch gekennzeichnet daß**
- Schalter (3) zum wahlweisen Verbinden von ausgewählten Feldelektroden (2) mit einem Meßsignal (4), einem phasenverschobenen Meßsignal (5) oder einem Massepotential (6) vorgesehen sind,
- daß eine Steuerungseinheit zum gleichzeitigen Beaufschlagen ! einer Feldelektrode (2) mit einem Meßsignal (4) und einer benachbarten Feldelektrode (2) mit einem phasenverschobenen Meßsignal (5) vorgesehen ist,
- daß ein mit den Meßelektroden (8) verschaltbarer Phasenvergleicher (11) zum Ermitteln der Phasenverschiebung des an der bzw. den den beaufschlagten Feldelektroden entsprechenden Meßelektrode(n) gemessenen, aus den beiden phasenverschobenen Meßsignalen (4,5) resultierenden Signals in bezug auf ein Referenzsignal (12) vorgesehen ist, und
- daß eine Auswerteschaltung zur Ermittlung des Füllstands in Abhängigkeit von der Phasenverschiebung vorgesehen ist.

6. Füllstandssensor nach Anspruch 5, **dadurch gekennzeichnet, daß** jeweils eine Meßelektrode (8) für mehrere Feldelektroden (2), vorgesehen ist.

7. Füllstandssensor nach Anspruch 6, **dadurch gekennzeichnet, daß** jeweils für vier Feldelektroden (2) eine Meßelektrode (8) vorgesehen ist.

8. Füllstandssensor nach einem der Ansprüche 5 bis 7, **dadurch gekennzeichnet, daß** jeweils ein Schalter (9) an den Meßelektroden (8) vorgesehen ist, um die Meßelektroden (8) wahlweise mit dem Phasenvergleicher (11) oder einem Massepotential zu verbinden.

9. Füllstandssensor nach einem der Ansprüche 5 bis 8, **dadurch gekennzeichnet, daß** zwischen dem Phasenvergleicher (11) und den Meßelektroden (8) ein Summierverstärker (10) geschaltet ist.

10. Füllstandssensor nach Anspruch 9, **dadurch gekennzeichnet, daß** ein Amplitudenvergleicher (16) hinter den Summierverstärker (10) geschaltet ist, um die Signalamplitude mit einer Referenzamplitude (17) zu vergleichen und das Medium zu bestimmen, das die beaufschlagten Sensoren (1) umgibt.

## Claims

1. Method for measuring a filling level with a multiplicity of capacitive sensors (1), arranged next to one another along a filling section and comprising field electrodes (2) and diametrically opposite measuring electrodes (8), with the steps of:
- simultaneously applying a measuring signal (4) to a field electrode (2) and a phase-shifted measuring signal (5) to a neighbouring field electrode (2),
- measuring a resultant signal at the measuring electrode(s) (8) corresponding to the field electrodes to which the signals are applied,
- determining the phase shift of the resultant signal with respect to a reference signal (12), and
- ascertaining the filling level in dependence on the phase shift, the sensors (1) having the signals applied to them and being evaluated continuously in series along the filling section.

2. Method according to Claim 1, **characterized in that** the phase shift between the measuring signal (4) and the phase-shifted measuring signal (5) is 180°.

3. Method according to Claim 1 or 2, **characterized in that** the sensors (1) to which a measuring signal is not applied are connected to an earth potential (6).

4. Method according to one of the preceding claims, **characterized by** detecting a medium which is surrounding the sensors (1) to which signals are applied, by summating the resultant signals and comparing the amplitude of the summated signal with a reference amplitude (17).

5. Filling level sensor with a multiplicity of capacitive sensors (1), arranged next to one another along a filling section and comprising field electrodes (2) and diametrically opposite measuring electrodes (8), it being possible for the sensors (1) to have the signals applied to them and be evaluated continuously in series along the filling section, **characterized in that**
- switches (3) are provided for optionally connecting selected field electrodes (2) to a measuring signal (4), a phase-shifted measuring signal (5) or an earth potential (6),
- **in that** a control unit is provided for simultaneously applying a measuring signal (4) to a field electrode (2) and a phase-shifted measuring signal (5) to a neighbouring field electrode (2),
- **in that** a phase comparator (11) which can be connected to the measuring electrodes (8) is provided for ascertaining the phase shift with respect to a reference signal (12) of the signal which is measured at the measuring electrode(s) corresponding to the field electrodes to which the signals are applied and results from the two phase-shifted measuring signals (4, 5), and
- **in that** an evaluation circuit is provided for ascertaining the filling level in dependence on the phase shift.

6. Filling level sensor according to Claim 5, **characterized in that** a measuring electrode (8) is respectively provided for a number of field electrodes (2).

7. Filling level sensor according to Claim 6, **characterized in that** a measuring electrode (8) is respectively provided for four field electrodes (2).

8. Filling level sensor according to one of Claims 5 to 7, **characterized in that** a switch (9) is respectively provided at the measuring electrodes (8) in order to connect the measuring electrodes (8) optionally to the phase comparator (11) or an earth potential.

9. Filling level sensor according to one of Claims 5 to 8, **characterized in that** a summing amplifier (10) is connected between the phase comparator (11) and the measuring electrodes (8).

10. Filling level sensor according to Claim 9, **characterized in that** an amplitude comparator (16) is connected downstream of the summing amplifier, in order to compare the signal amplitude with a reference amplitude (17) and to determine the medium which is surrounding the sensors (1) to which the signals are applied.

## Revendications

1. Procédé de mesure de niveau de remplissage au moyen de plusieurs capteurs capacitifs (1) agencés côte à côte le long d'un parcours de remplissage, constitués d'électrodes de champ (2) et d'électrodes de mesure (8) diamétralement opposées, comprenant les étapes suivantes :
- alimenter simultanément une électrode de champ (2) avec un signal de mesure (4) et une électrode de champ voisine (2) avec un signal de mesure déphasé (5),
- mesurer un signal résultant sur la ou les électrode(s) de mesure (8) correspondant aux électrodes de champ alimentées,
- déterminer le déphasage du signal résultant par rapport à un signal de référence (12), et
- obtenir le niveau de remplissage en fonction du déphasage, les capteurs (1) étant continuellement alimentés et évalués à tour de rôle le long du parcours de remplissage.

2. Procédé selon la revendication 1, **caractérisé en ce que** le déphasage entre le signal de mesure (4) et le signal de mesure déphasé (5) est de 180°.

3. Procédé selon la revendication 1 ou 2, **caractérisé en ce que** l'on applique un potentiel de masse (6) aux capteurs (1) qui ne sont pas alimentés avec un signal de mesure.

4. Procédé selon l'une des revendications précédentes, **caractérisé en ce qu'**on reconnaît un milieu qui environne les capteurs (1) alimentés, par sommation des signaux résultants, et comparaison de l'amplitude du signal sommé avec une amplitude de référence (17).

5. Détecteur de niveau de remplissage comprenant plusieurs capteurs capacitifs (1) agencés côte à côte le long d'un parcours de remplissage, constitués d'électrodes de champ (2) et d'électrodes de mesure (8) diamétralement opposées, les capteurs (1) pouvant être alimentés et évalués en continu à tour de rôle le long du parcours de remplissage, **caractérisé en ce que** :
- il est prévu des commutateurs (3) pour relier sélectivement des électrodes de champ (2) sélectionnées à un signal de mesure (4), un signal de mesure déphasé (5) ou un potentiel de masse (6),
- **en ce qu'**il est prévu une unité de commande pour alimenter simultanément une électrode de champ (2) avec un signal de mesure (4) et une électrode de champ voisine (2) avec un signal de mesure déphasé (5),
- **en ce qu'**il est prévu un comparateur de phase (11) pouvant être commuté avec les électrodes de mesure (8) pour fournir le déphasage, par rapport à un signal de référence (12), du signal résultant des deux signaux de mesure (4, 5) déphasés, mesurés sur la ou les électrodes(s) de mesure correspondant aux électrodes de champ alimentées, et
- **en ce qu'**il est prévu un circuit d'évaluation pour fournir le niveau de remplissage en fonction du déphasage.

6. Détecteur de niveau de remplissage selon la revendication 5, **caractérisé en ce que** chaque électrode de mesure (8) est prévue pour plusieurs électrodes de champ (2).

7. Détecteur de niveau de remplissage selon la revendication 6, **caractérisé en ce que** chaque électrode de mesure (8) est prévue pour quatre électrodes de champ (2).

8. Détecteur de niveau de remplissage selon l'une des revendications 5 à 7, **caractérisé en ce qu'**il est prévu un commutateur (9) sur chacune des électrodes de mesure (8), pour raccorder les électrodes de mesure (8) sélectivement avec le comparateur de phase (11) ou un potentiel de masse.

9. Détecteur de niveau de remplissage selon l'une des revendications 5 à 8, **caractérisé en ce qu'**un amplificateur sommateur (10) est monté entre le comparateur de phase (11) et les électrodes de mesure (8).

10. Détecteur de niveau de remplissage selon la revendication 9, **caractérisé en ce qu'**un comparateur d'amplitude (16) est monté derrière l'amplificateur sommateur (10) pour comparer l'amplitude du signal avec une amplitude de référence (17) et déterminer le milieu qui environne les capteurs alimentés (1).
